# EUROPEAN PATENT SPECIFICATION

(11) **EP 1 060 415 B1**
(45) Date of publication and mention of the grant of the patent: **16.04.2003**
(21) Application number: 99908016.1
(22) Date of filing: 24.02.1999
(51) Int. Cl.: G02B 5/128

(54) **REFLECTING MATERIAL**
REFEKTIERENDES MATERIAL
MATERIAU REFLECHISSANT

(30) Priority: 05.03.1998 SE 9800689
(43) Date of publication of application: 20.12.2000
(73) Proprietor: Headlight Helmets AB, 351 04 Växjö (SE)
(72) Inventor: ANDERSSON, Stig, S-263 32 Höganäs (SE)
(74) Representative: Petri, Stellan
(86) International application number: PCT/SE99/00254
(87) International publication number: WO 99/045413

(56) References cited:
- WO-A1-97/10279
- FR-A1- 2 716 008
- FR-A2- 2 356 166

## Description

The present invention refers to a method for thermoforming reflective material for the manufacturing of a reflecting product.

While performing different activities during more or less bad lighting, it is important for a person performing the activities to be completely visible. At present, a person can obtain a lower degree of protection by different types of reflex tapes, so as to be visible during poor light conditions. This does not only apply to different types of spare time activities, such as bicycling and horse riding, but also to activities related to employment, such as for instance firemen and policemen, which have to protect themselves with adequate reflector means when working professionally under conditions with low levels of lighting. In this connection a "reflector means" accomplishes a reflection in which light is reflected in directions close to the direction from which it came.

In the nowadays existing traffic environment, it is especially important to protect the head, and this applies to children as well as grown-ups. However, conventional helmets are not easily noticed, for example, by motorists at night, and the user may risk injury from a traffic accident on such occasions even if a helmet is used. In order to alert a motorist under these conditions, several types of reflecting warning signs, which are visible at night, are now commercially available.

Ordinary plane reflector means, however, have a limited protecting effect by only emitting light when struck by light from only one direction. It is true that different kinds of adhesive reflecting tapes exist which can be fastened for example on clothes or helmets. However, a self-adhesive material, such as a sticker, cannot be applied to a curved surface due to the formation of wrinkles. On the same grounds, it can neither be applied to a material in the form of a sheet which subsequently is fixed onto a curved surface by means of thermoforming, since the material then will crack or crackle. Due to the above mentioned problems, reflecting materials according to the state of the art rapidly loose their reflecting properties when applied to irregular or curved surfaces.

The purpose of the invention is thus to provide a method as defined in the claims. The application also discloses reflecting material which can be used both as a reflecting plane sheet per se and as a material for thermoforming, preferably by means of vacuum forming, to a curved or irregular surface, the material retaining its reflecting property without crack formation or cracking.

In order to explain the invention in more detail, reference is made to the accompanying drawing, in which
FIG 1 schematically shows a cross section through a reflecting material in the form of a sheet,
FIG 2 schematically shows a cross section through a further development of the embodiment of the reflecting material, which is shown in FIG 1,
FIG 3 schematically shows a cross section through an alternative embodiment of the reflecting material, and
FIG 4 schematically shows a cross section through a reflecting material.

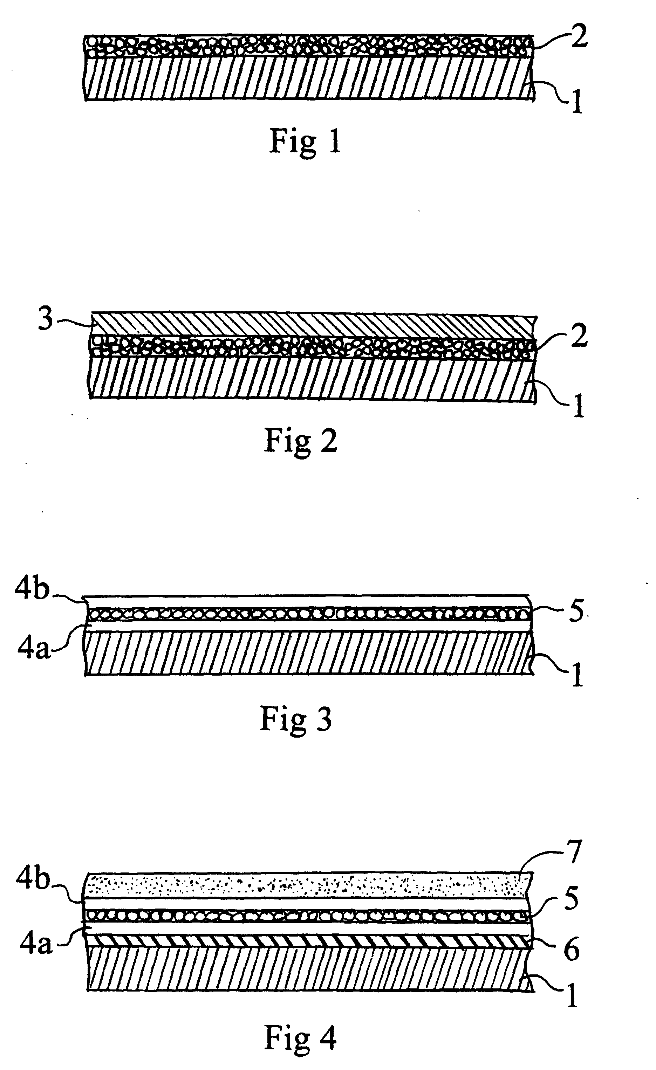

In FIG 1 the material is shown in its most simple form, and consists of a plane sheet 1 which is coated with a reflecting layer 2. The sheet 1 can be of every type of plastic material. However, it is preferred that the sheet comprises a transparent thermoplastic polymer material, preferably crystal-clear polyvinyl chloride (PVC) or polyester, the polyester being preferred since it is more harmless to the environment.

The reflecting layer 2 comprises a suspension of pearls, for example of glass or plastic, in an adhering substance, preferably a lacquer. In this connection a lacquer means a non-pigmented liquid with an organic film forming substance which can be a natural resin, a synthetic resin or an oil. Preferably a so-called screen printing lacquer is used.

It is an important aspect of the invention that pearls of a certain size are mixed with the adhesive substance. Preferably, the pearls have a diameter between 0.01 and 0.05 mm. The adhesive substance must be able to attach to the plastic at the same time as it shall be able to bind to the pearls. Thus, the adhering substance comprises an etching transparent glue coating. In this connection etching refers to an increase in surface roughness of the plastic by dissolution of the same. After the application of the reflecting layer 2, the adhering substance in the form of a lacquer is hardened, preferably by means of heat, but it can also be hardened in other ways, for example by means of radiation.

In order to obtain a reflecting laminated material, the adhering substance and pearls of for example glass or plastic are mixed into a suspension which must have a suitable consistency so that the pearls of microscopic size will be transferred to the plane sheet 1 by means of a known technique in the form of screen printing (silk screen processing). This is a method which normally is used for applying a pattern to a plastic sheet which is to be subjected to thermoforming. The size of the pearls is thus also adapted to be able to pass through the open holes of a screen stencil which normally is used for pressing a pattern medium against the sheet. When the pearls used are of glass, they must be polished pearls of high quality. The same type of glass pearls as in existing reflecting tapes can be used with advantage. Preferably, the size of the glass pearls lies within the range of 0.01-0.05 mm.

By this procedure, the suspension is anchored on the plane material, a reflecting surface being obtained. The more pearls mixed into the suspension, the better reflectance is achieved. In this connection the amount of glass pearls suspended in the adhering substance in the form of a lacquer could surprisingly comprise as much as 85 %. This results in the consumption of 1 kg glass pearls for covering 4-5 m² of the sheet, which after thermoforming for example can be used for shells for about 50 helmets of normal size.

The material can in this embodiment also be used for achieving a reflection in two directions, by the reflective layer being applied to both sides of a suitable surface. It is of advantage if this surface is a sheet of plastic material which can be thermoformed. Preferably all kinds of existing materials of polyvinyl chloride (PVC) are used, i.e. all thermoplastic materials which comprise polymers of vinyl chloride. The plane reflecting material can also be used without thermoforming in the form of a traffic sign or another warning sign indicating danger or other circumstances which should be observed by the public.

When the reflective layer 2 has been applied to the sheet 1, other patterns can be printed on the material according to the invention. This is then thermoformed, for example by means of vacuum forming, to a shape corresponding to the curved surfaces, which the shells thus formed are intended to fit. The thermoplastic material according to the invention, in the form of a plane or flexible sheet or foil of a thickness which is sufficient for vacuum forming, is then heated to its vacuum forming temperature and formed to a general contour of a mould by means of a pressure difference. Thus, vacuum forming is performed by means of known techniques at 130 °C, the material being drawn and stretched to a shell which for example has the shape of a helmet.

After cooling, the thin shells formed are sawn into separate units, and holes are optionally punched out in them. If the shells are to be used in a finished product in the form of a helmet, the shell is finally glued onto an inner helmet which has a protective effect on the head.

The helmet can then, if desired, be built in with a further plastic layer. This can be necessary since the virtual reflection can be reduced, i.e. in humid weather. For this reason a further coating is applied to the finished product, e.g. a layer which protects the reflecting layer and strengthens it even more. As shown in FIG 2, this can be achieved by a further layer 3 of preferably PVC being applied by means of for example high-frequency welding to the reflecting layer 2 which in turn is disposed on the plane sheet 1.

A more cost-efficient embodiment according to FIG 1 is shown in FIG 3, a plane sheet 1 of preferably a plastic material being used as above, said material being workable by means of vacuum forming. In this embodiment a layer 4a of an adhering substance is disposed on the sheet 1, and a thin layer 5 of pearls is applied to the layer 4a. A further layer 4b of an adhering substance is again disposed over this layer 5 of pearls.

The layers 4a and 4b preferably consist of the same transparent glass-clear adhering substance in the form of a lacquer, the lacquer in the layer 4a being etching as in the previous embodiment.

With reference to FIG 3, the reflecting laminated material is achieved by the etching layer 4a of adhering substance being applied to the sheet 1. Pearls are spread onto this layer before it has dried. This can for example be accomplished mechanically with an equipment which usually is utilised for coating with different kinds of powders. Glass pearls are for example spread in this procedure so that they will fall down onto the still sticky layer 4a, a monolayer of glass pearls contacting the same with non-adhering pearls on the top. The sheet with accompanying layers 4a and 5 is then allowed to pass an oven for curing of the adhering substance in the layer 4a. When this layer has been cured, non-adhering glass pearls can be sucked off and reused. Another layer 4b of adhering substance is then applied to the layer 5 of glass pearls, the sheet with accompanying layers then being allowed to pass the oven again for curing of the layer 4b.

The material according to this embodiment can also be vacuum formed into a reflecting shell to be applied to a curved surface without any crackle formation taken place during the forming procedure. The reflecting surface is sufficiently well adapted for many applications in order to provide for an efficient reflecting effect.

In FIG 4 an embodiment is shown which is especially preferred when the material according to the invention is to be used for reflecting helmets. By arranging the product in the form of a shell from the material according to the invention for example on the inside of a bicycle helmet, in which holes have been cut out for the reflecting material, the reflecting product can be used where it is more protected from the surrounding world. In this embodiment this can be achieved by a layer of the material according to the invention being arranged on that side of the sheet 1 which in the finished helmet will not be directed towards the light source, i.e. the sheet 1 acts as a protecting layer for the other layers.

With reference to FIG 4, a colour layer 6 is arranged between the sheet 1 and the layer 4a of an adhering substance. The colour layer 6 comprises a transparent dye known in the art, which can be excluded in dependence of the design and appearance of the final product. The reflecting layer is arranged as in the preceding embodiment in the form of a single layer of pearls, for example of glass or plastic, between two layers, 4a and 4b, of adhering substance. In this connection the adhering substance used should be able to etch dyes as well as plastics.

A layer 7 of a material with high gloss, for example silver or aluminium, is disposed on the layer 4b of adhering substance in order to further amplify the reflection. Preferably, aluminium particles are used. Thus, when the reflecting layer 5 is illuminated, the light not immediately reflected by this layer will be reflected with total reflectance by the layer 7 and re-transmitted towards the observer after reflection by the pearls in the layer 5.

The layer 7 is preferably applied to the laminate as a paste of commercial aluminium particles by means of the above-mentioned technique in the form of screen printing.

The reflecting laminated material can then be heated to a temperature which is suitable for vacuum forming, e.g. 130 °C, vacuum forming then being performed as described above. The reflecting material in the form of a sheet according to the invention must in this connection have a thickness which is sufficient considering the product contemplated after vacuum forming. The material can for example be vacuum formed into a shell in the form of a helmet which becomes highly reflecting from the outside with the reflecting layer on the inside of the helmet, the reflecting layer thus being protected against all types of damages. In this way a helmet of impact-resistant plastic can be achieved with reflecting patterns as well as usual patterns, which can result in increased road safety, especially for children.

It should be observed, that a colour layer, if desired, can be arranged in a corresponding way in other embodiments. In this connection the location of the colour layer in the laminate is not crucial. A dye can also be mixed into the suspension of pearls and adhering substance, a reflection of the corresponding colour then being obtained. In this connection the dyes should also be transparent. Furthermore, it is important that all transparent components in the material according to the invention retain this property after thermoforming, such as vacuum forming.

Warning articles manufactured from the above reflective material present a reflective construction which is durable, rather cheap and quite visible under poor natural light conditions, especially at night, when the reflecting articles are illuminated by an external active light source, such as a light from a head light of a car. By the vacuum forming property of the inventive material, the invention can be used for increased safety, especially on the roads. Products having an irregular or curved surface can be produced with a functional reflectance when the present invention is used. Thus, all kinds of light reflecting products can be achieved, such as bicycle helmets, protective helmets for building workers and playing children, and so on. Accordingly, the reflective material can be used as a reflective device with the capability of reflecting light and thus being visible from all angles, i.e. a retro-reflecting device generating a reflection in all directions and usable on a person as such. Other products for increased road safety can also be obtained by using the invention when a more or less completely reflecting surface is desired, such as hub caps with ornaments and reflective patterns.

## Claims

1. A method of manufacturing a retro-reflecting shell having a curved or irregular surface with the capability of reflecting light in all directions, the method comprising the steps of
mixing transparent glass or plastic pearls with a diameter between 0.01 and 0.05 mm in an adhesive transparent substance;
transferring said mixture to a plane sheet (1) of transparent plastic so as to form thereon a reflecting layer (2,5) of pearls at least partially embedded in said adhesive transparent substance, which adheres to said pearls as well as said plastic sheet; and subjecting said reflecting layer (2,5) of pearls as well as said plane sheet (1) of transparent plastic adjacent on one side thereof to vacuum forming to a shape corresponding to a curved or irregular surface.

2. A method as in claim 1, **characterized in that** said mixture of pearls is transferred to said plane sheet (1) of transparent plastic by means of screen printing.

3. A method as in claim 1 or 2, **characterized in that** said adhesive transparent substance is cured prior to said vacuum forming.

4. A method as in any of claims 1-3, **characterized in that** before said vacuum forming a layer (3) of transparent plastic is applied to the other side of said reflecting layer (2) of pearls, opposite to said plane sheet (1) of transparent plastic.

5. A method as in any of claims 1-3, **characterized in that** before said vacuum forming said adhesive substance is applied as a first and a second surrounding layer (4a, 4b) surrounding said layer (5) of pearls, said first surrounding layer (4a) being applied adjacent to said plane sheet (1) of transparent plastic.

6. A method as in claim 5, **characterized in that** the pearls in said layer (5) form a monolayer.

7. A method as in any of claims 1-6, **characterized in that** said transparent plastic comprises polyvinyl chloride or polyester.

8. A method as in claim 4 and 7, **characterized in that** when said layer (3) of transparent plastic comprises polyvinyl chloride it is high-frequency welded to said reflecting layer (2).

9. A method as in any of claims 1-8, **characterized in that** said adhesive transparent substance is a lacquer.

10. A method as in claim 5, **characterized in that** said lacquer is a screen printing lacquer.

11. A method as in any of claims 1-5, **characterized in that** before said vacuum forming a high gloss material layer (7) is applied adjacent to said second surrounding layer (4b) of adhesive substance opposite to said reflecting layer (5) of pearls.

12. A method as in any of claims 1-5, **characterized in that** before said vacuum forming a layer (6) of a transparent dye is applied adjacent to said plane sheet (1) of transparent plastic.

13. A method as in claim 5, **characterized in that** said high gloss material layer (7) comprises aluminium particles.

## Patentansprüche

1. Ein Verfahren zur Herstellung einer reflektierenden Hülle, die eine gekrümmte oder ungleichmäßige Oberfläche mit der Fähigkeit, Licht in alle Richtungen zu reflektieren, aufweist, wobei das Verfahren die Schritte aufweist, daß transparente Glas- der Kunststoffperlen mit einem Durchmesser zwischen 0,01 und 0,05 mm in eine klebende, transparente Substanz gemischt wird; das Gemisch auf einen ebenen Bogen (1) aus transparentem Kunststoff übertragen wird, um darauf eine reflektierende Schicht (2, 5) aus Perlen zu bilden, die wenigstens teilweise in die klebende transparente Substanz eingebettet sind, welche an den Perlen sowie an dem Kunststoffbogen haftet; und daß die reflektierende Schicht (2, 5) aus Perlen sowie der auf einer Seite davon benachbarte ebene Bogen (1) aus transparentem Kunststoff in einem Vakuumformgebungsprozeß in eine Form gebracht werden, die einer gekrümmten oder unregelmäßigen Fläche entspricht.

2. Ein Verfahren wie in Anspruch 1, **dadurch gekennzeichnet, daß** das Gemisch aus Perlen auf den ebenen Bogen (2) aus transparentem Kunststoff durch Siebdruck übertragen wird.

3. Ein Verfahren wie in Anspruch 1 oder 2, **dadurch gekennzeichnet, daß** die klebende, transparente Substanz vor der Vakuumformgebung gehärtet wird.

4. Ein Verfahren wie in einem der Ansprüche 1 bis 3, **dadurch gekennzeichnet, daß** vor der Vakuumformgebung eine Schicht (3) aus transparentem Kunststoff auf die andere Seite der reflektierenden Schicht (2) aus Perlen dem ebenen Bogen (1) aus transparentem Kunststoff gegenüberliegend angebracht wird.

5. Ein Verfahren wie in einem der Ansprüche 1 bis 3, **dadurch gekennzeichnet, daß** vor der Vakuumformgebung die klebende Substanz als eine erste und eine zweite umgebende Schicht (4a, 4b), welche die Schicht (5) aus Perlen umgeben, aufgebracht wird, wobei die erste umgebende Schicht (4a) neben dem ebenen Bogen (1) aus transparentem Kunststoff aufgebracht wird.

6. Ein Verfahren wie in Anspruch 5, **dadurch gekennzeichnet, daß** die Perlen in der Schicht (5) eine Monolage bilden.

7. Ein Verfahren wie in einem der Ansprüche 1 bis 6, **dadurch gekennzeichnet, daß** der transparente Kunststoff Polyvinylchlorid oder Polyester umfaßt.

8. Ein Verfahren wie in Anspruch 4 und 7, **dadurch gekennzeichnet, daß** wenn die Schicht (3) aus transparentem Kunststoff Polyvinylchlorid aufweist, sie an der reflektierenden Schicht (2) im Hochfrequenzschweißverfahren angebracht wird.

9. Ein Verfahren wie in einem der Ansprüche 1 bis 8, **dadurch gekennzeichnet, daß** die klebende, transparente Substanz ein Lack ist.

10. Ein Verfahren wie in Anspruch 5, **dadurch gekennzeichnet, daß** der Lack ein Siebdrucklack ist.

11. Ein Verfahren wie in einem der Ansprüche 1 bis 5, **dadurch gekennzeichnet, daß** vor der Vakuumformgebung eine Hochglanzmaterialschicht (7) benachbart der zweiten umgebenden Schicht (4b) der klebenden Substanz und der reflektierenden Schicht (5) aus Perlen gegenüberliegend aufgebracht wird.

12. Ein Verfahren wie in einem der Ansprüche 1 bis 5, **dadurch gekennzeichnet, daß** vor der Vakuumformgebung eine Schicht (6) einer transparenten Farbe neben dem ebenen Bogen (1) aus transparentem Kunststoff aufgebracht wird.

13. Ein Verfahren wie in Anspruch 5, **dadurch gekennzeichnet, daß** die Hochglanzmaterialschicht (7) Aluminiumpartikel umfaßt.

## Revendications

1. Procédé de fabrication d'une coque rétro-réfléchissante ayant une surface irrégulière ou incurvée avec capacité de réfléchir la lumière dans toutes les directions, le procédé comprenant les étapes de
mélange de perles en matière plastique ou en verre transparent d'un diamètre compris entre 0,01 et 0,05 mm dans une substance adhésive transparente;
transfert dudit mélange sur une feuille plane (1) de matière plastique transparente de façon à former dessus une couche réfléchissante (2,5) de perles au moins partiellement incrustées dans ladite substance adhésive transparente, qui adhère auxdites perles de même qu'à ladite feuille de matière plastique; et soumission de ladite couche réfléchissante (2,5) de perles de même que ladite feuille plane (1) de matière plastique transparente dont une face est adjacente à la formation de vide jusqu'à obtention d'une forme correspondant à une surface irrégulière ou incurvée.

2. Procédé selon la revendication 1, **caractérisé en ce que** ledit mélange de perles est transféré à ladite feuille plane (1) de matière plastique transparente au moyen d'impression écran.

3. Procédé selon la revendication 1 ou 2, **caractérisé en ce que** ladite substance adhésive transparente est vulcanisée avant ladite formation de vide.

4. Procédé selon l'une quelconque des revendications 1 à 3, **caractérisé en ce qu'**avant ladite formation de vide, une couche (3) de matière plastique transparente est appliquée sur l'autre face de ladite couche réfléchissante (2) de perles, à l'opposé de ladite feuille plane (1) de matière plastique transparente.

5. Procédé selon l'une quelconque des revendications 1 à 3, **caractérisé en ce qu'**avant ladite formation de vide, ladite substance adhésive est appliquée en tant que première et deuxième couches enveloppantes (4a, 4b) entourant ladite couche (5) de perles, ladite première couche enveloppante (4a) étant apposée à ladite feuille plane (1) de matière plastique transparente.

6. Procédé selon la revendication 5, **caractérisé en ce que** les perles dans ladite couche (5) forment une monocouche.

7. Procédé selon l'une quelconque des revendications 1 à 6, **caractérisé en ce que** ladite matière plastique transparente comprend du polychlorure de vinyle ou du polyester.

8. Procédé selon la revendication 4 et 7, **caractérisé en ce que** si ladite couche (3) de matière plastique transparente comprend du polychlorure de vinyle, elle est soudé à haute fréquence à ladite couche réfléchissante (2).

9. Procédé selon l'une quelconque des revendications 1 à 8, **caractérisé en ce que** ladite substance adhésive transparente est une laque.

10. Procédé selon la revendication 5, **caractérisé en ce que** ladite laque est une laque d'impression écran.

11. Procédé selon l'une quelconque des revendications 1 à 5, **caractérisé en ce qu'**avant ladite formation de vide, une couche de matériau de brillance élevée (7) est apposée à ladite deuxième couche enveloppante (4b) de substance adhésive, à l'opposé de ladite couche réfléchissante (5) de perles.

12. Procédé selon l'une quelconque des revendications 1 à 5, **caractérisé en ce qu'**avant ladite formation de vide, une couche (6) de colorant transparent est apposée à ladite feuille plane (1) de matière plastique transparente.

13. Procédé selon la revendication 5, **caractérisé en ce que** ladite couche de matériau de brillance élevée (7) comprend des particules d'aluminium.
